(19) 

Europäisches
Patentamt
European
Patent Office
Office européen
des brevets

(11) **EP 4 105 789 A1**

(12) **EUROPEAN PATENT APPLICATION**
published in accordance with Art. 153(4) EPC

(43) Date of publication:
**21.12.2022 Bulletin 2022/51**

(21) Application number: **21748459.1**

(22) Date of filing: **25.01.2021**

(51) International Patent Classification (IPC):
**G06F 16/2458** *(2019.01)*  **G06F 16/28** *(2019.01)*
**G06N 20/00** *(2019.01)*

(52) Cooperative Patent Classification (CPC):
**G06F 16/2458; G06F 16/28; G06N 20/00**

(86) International application number:
**PCT/JP2021/002366**

(87) International publication number:
**WO 2021/153477 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.01.2020 JP 2020014015**

(71) Applicant: **Sony Group Corporation**
**Minato-Ku, Tokyo, 108-0075 (JP)**

(72) Inventors:
 • **NAKADA, Kento**
   **Tokyo 108-0075 (JP)**

 • **HORIGUCHI, Yuji**
   **Tokyo 108-0075 (JP)**
 • **TAKAMATSU, Shingo**
   **Tokyo 108-0075 (JP)**
 • **IIDA, Hiroshi**
   **Tokyo 108-0075 (JP)**
 • **MIYAHARA, Masanori**
   **Tokyo 108-0075 (JP)**
 • **YOSHIDA, Masahiro**
   **Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND INFORMATION PROCESSING PROGRAM**

(57)    An information processing apparatus (1) includes a learning unit (32), a calculation unit (33), and a presentation unit (34). The learning unit (32) learns the first model based on predetermined new data acquired from a terminal device (100) possessed by the user and the second model based on joined data obtained by joining shared data stored in advance in the storage unit (4) as additional data with the new data. The calculation unit (33) calculates the improvement degree indicating the degree of improvement in the output precision of the second model to the output of the first model. The presentation unit (34) generates predetermined presentation information based on the improvement degree calculated by the calculation unit (33).

FIG.3

EP 4 105 789 A1

**Description**

Field

The present disclosure relates to an information processing apparatus, an information processing method, and an information processing program.

Background

In the related art, a technique has been known for providing a similar dataset to the data held by a user from among a plurality of datasets registered in a server (see, e.g., Patent Literature 1). In one example, the user adds the provided dataset to the data held by the user to learn a prediction model or the like.

Citation List

Patent Literature

Patent Literature 1: JP 2019-507444 A

Summary

Technical Problem

However, the technique in the related art just provides a similar dataset to the user's data, so whether or not the provided dataset is valuable for learning a model fails to be determined.
Thus, the present disclosure provides an information processing apparatus, information processing method, and information processing program capable of presenting data useful for model learning.

Solution to Problem

An information processing apparatus includes a learning unit, a calculation unit, and a presentation unit. The learning unit learns the first model based on predetermined new data acquired from a terminal device possessed by the user and the second model based on joined data obtained by joining shared data stored in advance in the storage unit as additional data with the new data. The calculation unit calculates the improvement degree indicating the degree of improvement in the output precision of the second model to the output of the first model. The presentation unit generates predetermined presentation information based on the improvement degree calculated by the calculation unit.

Brief Description of Drawings

FIG. 1A is a diagram illustrating an overview of an information processing method according to an embodiment.
FIG. 1B is a diagram illustrating an overview of an information processing method according to an embodiment.
FIG. 2 is a diagram illustrating an exemplary configuration of an information processing system according to an embodiment.
FIG. 3 is a block diagram illustrating an exemplary configuration of an information processing apparatus according to an embodiment.
FIG. 4 is a diagram illustrating statistical data generation processing.
FIG. 5 is a diagram illustrating meta-features calculation processing.
FIG. 6 is a diagram illustrating joining processing for generating joined data.
FIG. 7 is a diagram illustrating joining processing for generating joined data in a case of time-series data.
FIG. 8 is a diagram illustrating recommendation level information calculation processing.
FIG. 9 is a diagram illustrating recommendation level information calculation processing using graph theory.
FIG. 10 is a diagram illustrating an example of a screen display of user equipment.
FIG. 11 is a diagram illustrating an example of a screen display of user equipment.
FIG. 12 is a flowchart illustrating a procedure of processing executed by an information processing apparatus according to an embodiment.
FIG. 13 is a flowchart illustrating a procedure of processing executed by an information processing apparatus according to an embodiment.

FIG. 14 is a flowchart illustrating a procedure of processing executed by an information processing apparatus according to an embodiment.

FIG. 15 is a block diagram illustrating an example of the hardware configuration of the information processing apparatus according to the present embodiment.

Description of Embodiments

Hereinafter, embodiments of the present disclosure will be described in detail with reference to the drawings. In each of the following embodiments, the same parts are denoted by the same reference numerals, and redundant description will be omitted.

Furthermore, in the specification and the drawings, a plurality of constituent elements having substantially the same functional configuration may be distinguished from one another by adding different numbers after the same reference numeral. However, if it is not necessary to distinguish the plurality of constituent elements having substantially the same functional configuration from one another, only the same reference numeral is given.

<Overview of Information Processing Method according to Embodiment>

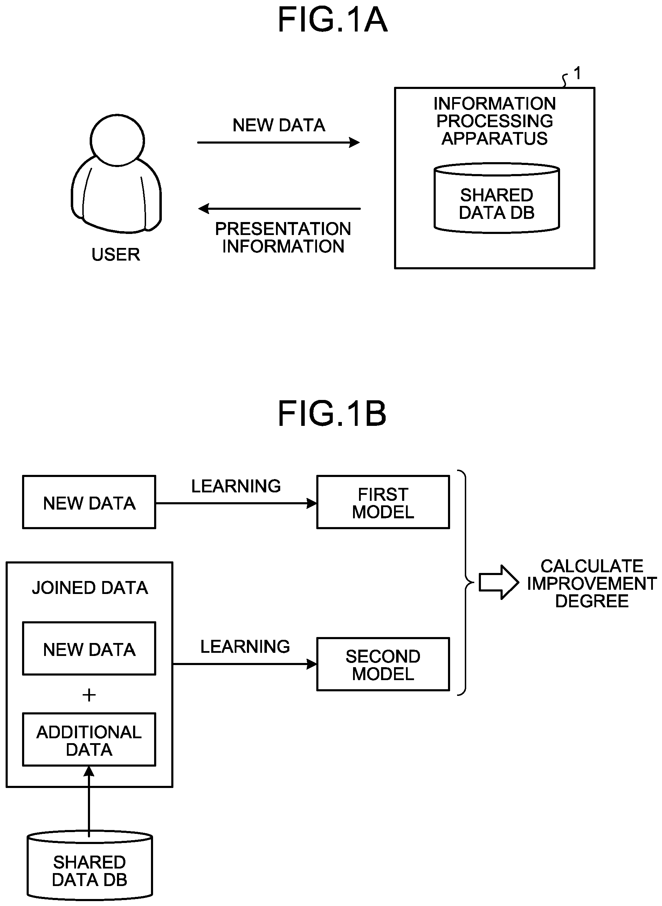

FIGS. 1A and 1B are diagrams illustrating an overview of an information processing method according to an embodiment. The information processing method according to an embodiment is executed by an information processing apparatus 1. As illustrated in FIG. 1A, the information processing apparatus 1 according to an embodiment stores a shared data database (DB) in a storage unit in advance. The information processing apparatus 1 also generates and presents predetermined presentation information to the user on the basis of new data received from a user (user equipment) and shared data stored in the shared data DB.

Specifically, the information processing apparatus 1 generates and presents the presentation information based on an improvement degree to the user (user equipment 100 described later). The improvement degree indicates the degree of improvement in the output precision of a model learned on the basis of joined data obtained by joining new data to shared data.

A description is now given of improvement degree calculation processing for calculating the improvement degree with reference to FIG. 1B. As illustrated in FIG. 1B, the information processing apparatus 1 first learns (creates) a first model on the basis of new data acquired from the user.

Subsequently, the information processing apparatus 1 learns (creates) a second model on the basis of the joined data obtained by joining the shared data selected from the shared data DB and used as additional data with the new data. Moreover, the additional data is selected, for example, on the basis of designation by the user or the meta-features of the shared data. The details thereof will be described later.

Then, the information processing apparatus 1 calculates the improvement degree indicating the degree of improvement in the output precision of the second model to the output of the first model. In other words, the information processing apparatus 1 calculates, as the improvement degree, the degree of improvement in the output precision of the second model to the output of the first model by joining the predetermined additional data with the new data. Moreover, the processing for calculating the improvement degree will be described in detail later.

This configuration makes it possible to present (recommend) additional data with a high improvement degree (improved output precision) to the user, for example, as presentation information based on the improvement degree. In other words, the information processing method according to an embodiment can calculate the improvement degree, enabling data (shared data) useful for model learning to be provided to the user.

Moreover, the information processing apparatus 1 can present the user with not only the additional data as the presentation information but also the improvement degree information itself. In other words, the information processing apparatus 1 presents, as the presentation information, information regarding the degree of improvement in the precision of a model is improved by adding the additional data. This configuration enables the user to easily determine how much the model learning can be improved using the additional data, so it is possible to add the additional data that is more efficient for the user to the new data to perform the model learning.

Moreover, the information processing apparatus 1 is capable of learning in advance an improvement degree model for estimating the improvement degree by using the shared data already stored to reduce the processing load. The details thereof will be described later.

<Configuration of Information Processing System according to Embodiment>

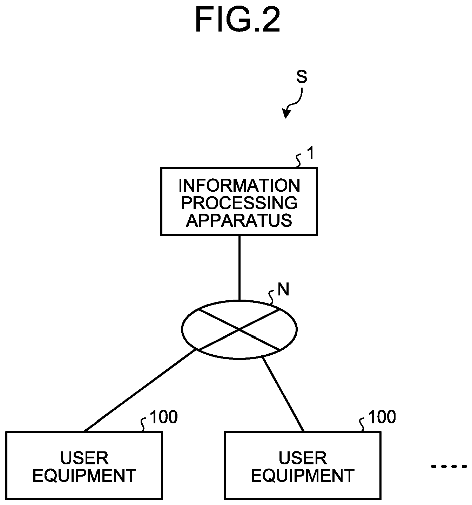

A description is now given of the configuration of an information processing system that includes the information processing apparatus 1 mentioned above with reference to FIG. 2. FIG. 2 is a diagram illustrating a configuration of an information processing system S according to an embodiment. As illustrated in FIG. 2, the information processing system S according to an embodiment includes the information processing apparatus 1 and a plurality of user equipment 100.

The information processing apparatus 1 and the plurality of user equipment 100 are connected via a network N. The network N is a communication network such as local area network (LAN), wide area network (WAN), telephone network (mobile phone network, fixed-line network, etc.), regional IP (Internet protocol) network, and the Internet. The network N can include wired or wireless networks.

The information processing apparatus 1 is, for example, a server device that provides various types of services to the user equipment 100. In one example, the information processing apparatus 1 provides the user equipment 100 with an application regarding model learning. Specifically, the information processing apparatus 1 performs model learning on the basis of new data received from the user equipment 100, calculates an improvement degree in the output precision of the model, and presents the presentation information described above to the user equipment 100. Moreover, various types of processing executed by the information processing apparatus 1 will be described in detail later.

The user equipment 100 is a terminal device used by the user. Examples of the user equipment 100 include a smartphone, desktop personal computer (PC), laptop PC, tablet terminal, mobile phone, personal digital assistant (PDA), wearable device, or the like. The user equipment 100 transmits new data (including shared data) input by the user and various request messages to the information processing apparatus 1 or outputs various types of information received from the information processing apparatus 1 in the form of voice or screen display.

<Configuration of Information Processing Apparatus according to Embodiment>

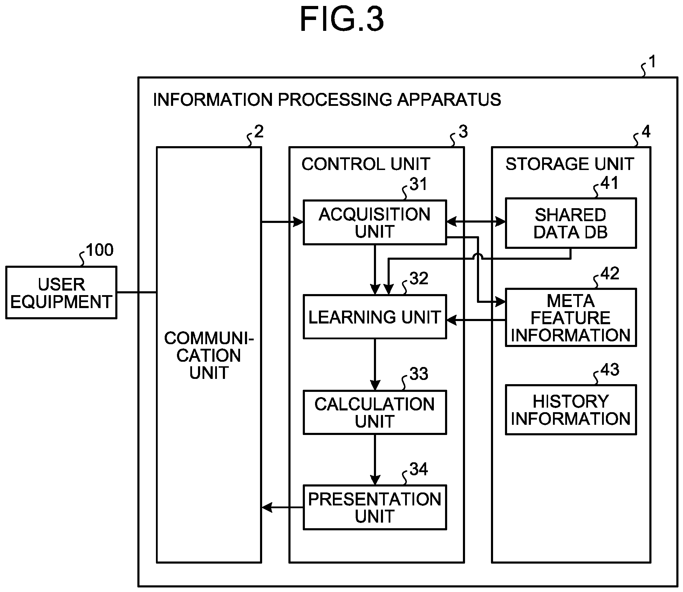

A description is now given of an exemplary configuration of the information processing apparatus 1 according to an embodiment with reference to FIG. 3. FIG. 3 is a block diagram illustrating an exemplary configuration of the information processing apparatus 1 according to an embodiment. As illustrated in FIG. 3, the information processing apparatus 1 according to an embodiment includes a communication unit 2, a control unit 3, and a storage unit 4.

The communication unit 2 is implemented as, for example, a network interface card (NIC) or the like. Then, the communication unit 2 is connected to a predetermined network N by wire or wirelessly and transmits or receives information to or from the user equipment 100.

The control unit 3 includes, for example, a central processing unit (CPU), micro processing unit (MPU), or the like to cause a program stored in the information processing apparatus 1 to be executed on a RAM or the like as a work area. In addition, the control unit 3 is a controller and is implemented as, for example, an integrated circuit such as an application-specific integrated circuit (ASIC) or field-programmable gate array (FPGA).

As illustrated in FIG. 3, the control unit 3 has an acquisition unit 31, a learning unit 32, a calculation unit 33, and a presentation unit 34. The control unit 3 implements or executes information processing functions or operations described below. Moreover, the control unit 3 can have components not limited to the configuration illustrated in FIG. 3, and also can have other configuration as long as it has a component for performing information processing described later.

The storage unit 4 is implemented as, for example, a semiconductor memory device such as random-access memory (RAM) and flash memory or a storage device such as a hard disk and optical disk.

The storage unit 4 is implemented as, for example, a semiconductor memory device such as random-access memory (RAM) and flash memory or a storage device such as a hard disk and optical disk. The storage unit 4 according to an embodiment stores a shared data DB 41, meta feature information 42, and history information 43 as illustrated in FIG. 3.

<Shared Data DB>

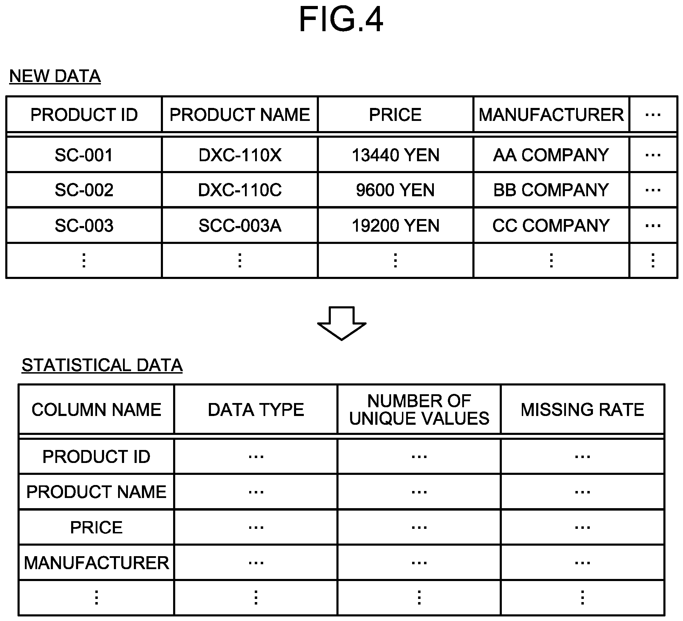

The shared data DB 41 is a database including a plurality of shared data generated on the basis of new data acquired from the user. Moreover, the processing for generating the shared data will be described later with reference to FIG. 4.

<Meta Feature Information>

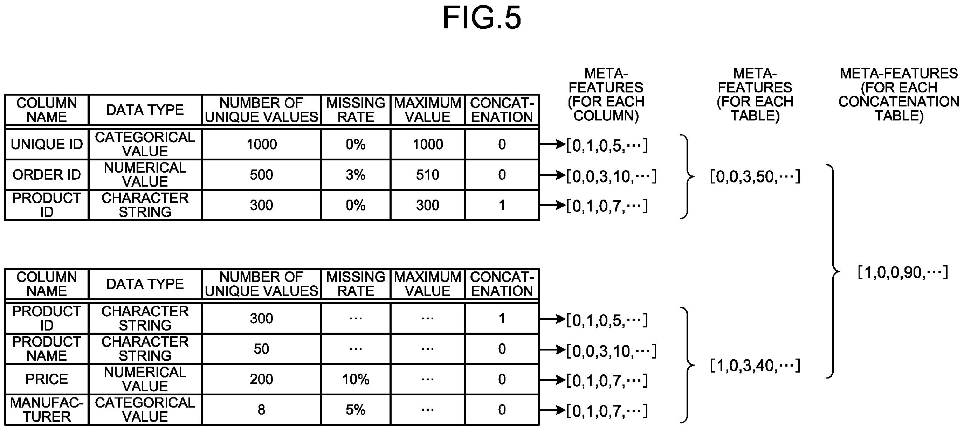

The meta feature information 42 is information regarding features of data. Specifically, the meta feature information 42 includes information regarding the meta-features calculated from new data and shared data. Moreover, the processing for calculating the meta-features will be described later with reference to FIG. 5.

<History Information>

The history information 43 is information regarding the user's behavior history for the shared data included in the shared data DB 41. Specifically, the history information 43 is information regarding the behavior history performed by the user for the shared data to learn the second model described later. The history information 43 includes information, such as the number of searches for the shared data (the number of search hits), the number of times of browsing shared data, the number of times of performing learning using additional data, the number of times of downloading the second model obtained by the learning, the actual operating performance of the second model (such as operating periods or the number of times of use), information regarding evaluation of shared data by the user employing the second model.

<Control Unit>

A description is now given of functions of the control unit 3 (the acquisition unit 31, the learning unit 32, the calculation unit 33, and the presentation unit 34).

The acquisition unit 31 acquires various types of data. In one example, the acquisition unit 31 acquires new data from the user equipment 100 and generates statistical data on the basis of the new data. The processing for generating the statistical data is now described with reference to FIG. 4.

FIG. 4 is a diagram illustrating statistical data generation processing. Moreover, the description is given of the case where the new data is a table type in FIG. 4 as an example, but the new data can be image data, audio data, graph structure data, or the like.

As illustrated in FIG. 4, the acquisition unit 31 performs statistical processing on the new data acquired from the user to generate the statistical data. In the example illustrated in FIG. 4, the statistical data includes items such as "column name", "data type", "number of unique values", and "missing rate".

The "column name" is information indicating the name of each item in the new data. The "data type" is information indicating the data type of each item in a column, and for example, information such as a categorical value, a character string, and a numerical value is input. The "number of unique values" is information indicating the number of different values of data of each item in a column. The "missing rate" is information indicating the missing rate of data of each item in a column.

Moreover, the statistical data illustrated in FIG. 4 is exemplary. The statistical data can include information such as the category of data in each column, the summary value of data in each column (such as maximum value, minimum value, average value, median value, variance, and deviation), and a concatenation candidate between multiple table data.

Then, the acquisition unit 31 presents the generated statistical data to the user and receives confirmation and correction for the statistical data from the user. Moreover, the acquisition unit 31 can receive explanatory information of the new data from the user. The explanatory information can be, for example, text information optionally input by the user or information regarding a selection result for a plurality of options regarding the description of data. In one example, the acquisition unit 31 can generate a result obtained by analyzing the explanatory information as the statistical data.

Then, if there is a request for correction of the statistical data from the user, the acquisition unit 31 corrects the statistical data in response to the correction request and presents the corrected statistical data to the user.

Further, the acquisition unit 31 receives a notification of the completion of confirmation of the statistical data from the user and also receives an instruction as to whether to store it as the shared data or to perform model learning. In one example, the acquisition unit 31, when receiving a storage instruction to store it as the shared data, stores association data obtained by associating the statistical data with the new data in the shared data DB 41 as the shared data.

On the other hand, the acquisition unit 31, when receiving a learning instruction to perform model learning, receives a designation of the column used for model learning and a designation of the column to be used as an output of the model among the new data together with the learning instruction. The acquisition unit 31 outputs information regarding the received learning instruction and the association data to the learning unit 32. Moreover, association data used to learn the first model is referred to as "learning data", and association data stored in the shared data DB 41 is referred to as "shared data" hereinafter.

Further, the acquisition unit 31 calculates features of the statistical data on the basis of the generated statistical data. The acquisition unit 31 calculates, for example, meta-features as the features. A description of the processing for calculating the meta-features is now given with reference to FIG. 5.

FIG. 5 is a diagram illustrating meta-features calculation processing. In FIG. 5, two pieces of statistical data having a concatenation relationship with each other are illustrated, and the two pieces of statistical data are generated from one piece of new data.

First, the acquisition unit 31 digitizes (meta-characterizes) data of each column (column name, data type, number of unique values, missing rate, maximum value, and concatenation) in the statistical data. Subsequently, the acquisition unit 31 calculates the meta-features by aggregating the meta-characterized numerical values for each column.

In the example illustrated in FIG. 5, for example, the meta-features of the column in the first row is [0, 1, 0, 5, ...]. Subsequently, the acquisition unit 31 calculates the meta-features of each table (that is, for each piece of statistical data) on the basis of the meta-features of each column.

For example, the acquisition unit 31 calculates the meta-features for each table by adding, averaging, simple joining, or the like the meta-features for each column. In the meta-features for each table, the column to be used as an output of the model is excluded.

Subsequently, the acquisition unit 31 calculates the meta-features of each concatenation table (that is, for each piece of new data or shared data) on the basis of the meta-features of each table. For example, the acquisition unit 31 calculates the meta-features for each concatenation table by adding, averaging, simple joining, or the like the meta-features for each table.

The acquisition unit 31 stores each calculated meta-features in the storage unit 4 as the meta feature information 42. Note that the acquisition unit 31 can adopt not only the meta-features but also any features as long as the features are obtained by digitizing the features of the new data and the shared data.

Note that when there is an update request from the user equipment 100 for the shared data already stored in the storage unit 4, the acquisition unit 31 updates the shared data on the basis of the update data included in the update request.

Furthermore, the acquisition unit 31 may perform and store anonymization processing on the shared data satisfying a predetermined condition in the storage unit 4. For example, in a case where data of a specific column included in the shared data is designated by the user, the acquisition unit 31 anonymizes and stores the data of the column.

Alternatively, the acquisition unit 31 may automatically perform and store anonymization processing using a predetermined anonymization algorithm (k-anonymization, differential privacy guarantee by Laplace mechanism, etc.). Note that, in such a case, the acquisition unit 31 may notify the user that the anonymization processing is to be performed.

The learning unit 32 learns the model on the basis of the learning instruction acquired by the acquisition unit 31. Note that any algorithm can be adopted as the learning algorithm of the first model and the second model.

The learning unit 32 learns a model that uses the column designated by the learning instruction as an output. Specifically, the learning unit 32 learns the first model on the basis of learning data that is new data. More specifically, the learning unit 32 learns the first model by using the meta-features of the learning data as an explanatory variable and using the designated column as an objective variable.

In addition, the learning unit 32 learns a second model on the basis of the joined data obtained by joining the shared data stored in the shared data DB 41 and used as additional data with the learning data. Specifically, the learning unit 32 calculates the meta-features of the joined data, and learns the second model by using the calculated meta-features as an explanatory variable and the designated column as an objective variable. Note that the learning unit 32 may instruct the acquisition unit 31 to calculate the meta-features of the joined data.

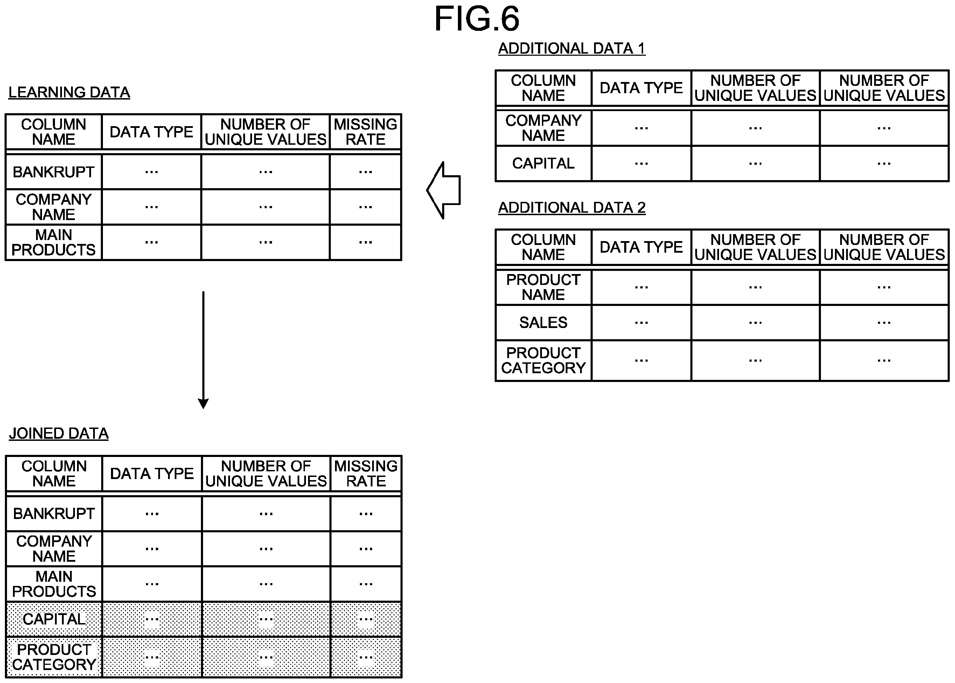

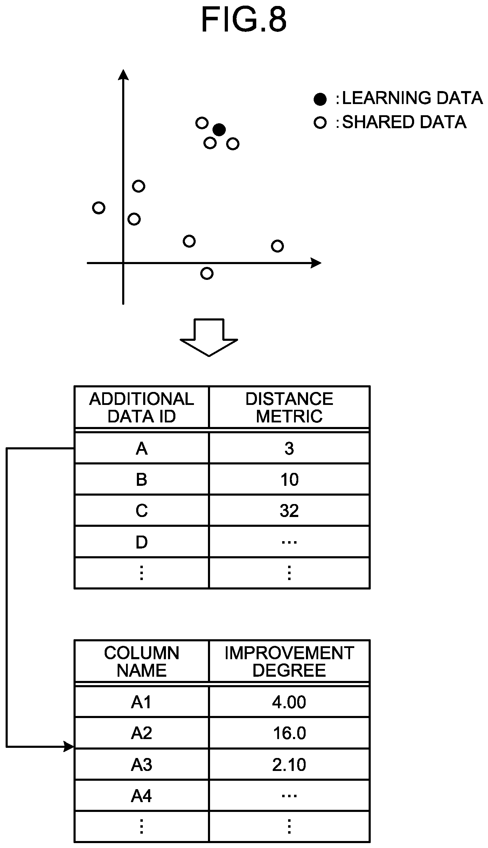

The joining processing for generating joined data is now described with reference to FIG. 6. FIG. 6 is a diagram illustrating joining processing for generating joined data. FIG. 6 illustrates a case where two pieces of additional data are joined with one piece of learning data. Note that, as the additional data, shared data similar to the learning data is selected, and such selection processing will be described later with reference to FIG. 8.

FIG. 6 illustrates a case where the learning unit 32 joins part of the column data of the statistical data of the additional data with the statistical data of the learning data. Specifically, the column data of the column name "capital" in the additional data 1 and the column data of the column name "product category" in the additional data 2 are joined with the learning data. Note that the column data to be joined may be column data selected by the user or may be column data selected by a predetermined algorithm.

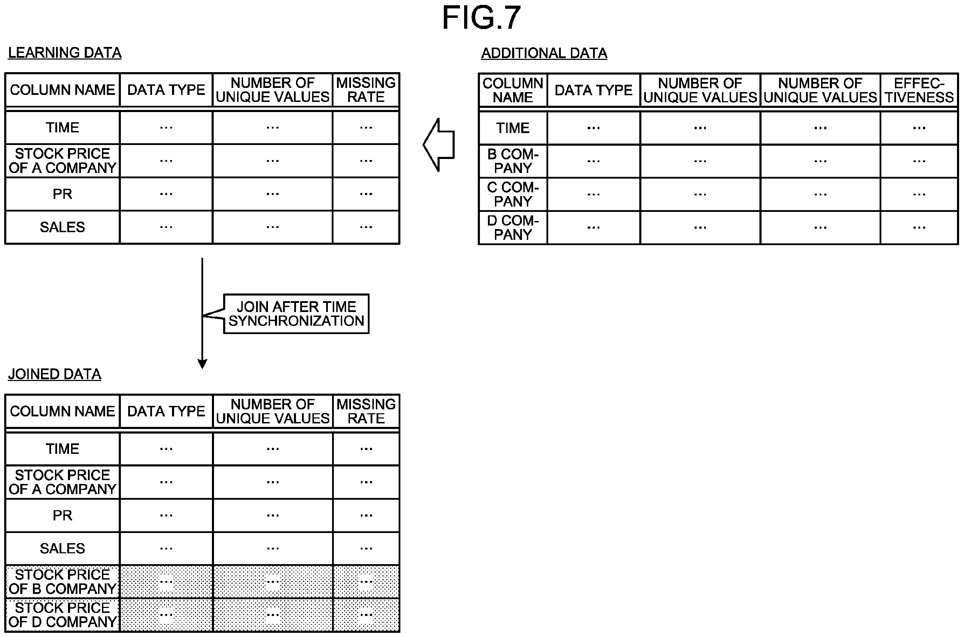

Note that if the learning data and the additional data are time-series data, the learning unit 32, in a case where the learning data and the additional data are inconsistent in time-series, generates and joins the additional data to be consistent with the time-series of the learning data. This point will be described with reference to FIG. 7.

FIG. 7 is a diagram illustrating joining processing for generating joined data in a case of time-series data. In FIG. 7, a case of joining the stock prices of B company and D company with the learning data including the stock price information of A company for each time will be described. In FIG. 7, it is assumed that the column name "time" in the learning data and the column name "time" in the additional data are different (the time itself may be different or the time interval may be different).

For example, in a case where the "time" of the learning data and the "time" of the additional data are shifted by 10 minutes, the learning unit 32 corrects the shift amount of 10 minutes of the "time" of the additional data to be aligned with the "time" of the learning data. In such a case, the stock price data in each column of the additional data may be corrected with a value corresponding to 10 minutes as the correction value, or the stock price data at the corrected time may be acquired from an external server.

Furthermore, for example, in a case where the "time" of the learning data is at an interval of 30 minutes, whereas the "time" of the additional data is at an interval of 60 minutes, the stock price data at an interval of 30 minutes is interpolated. For example, the stock price data to be interpolated may be an average value of previous and subsequent stock price data, or may be stock price data acquired from an external server.

That is, the learning unit 32 joins the additional data subjected to predetermined preprocessing called time synchronization with the learning data. As described above, the precision of the second model generated as the learning result can be improved by joining the additional data with the learning data in time synchronization.

Note that, as the preprocessing, the learning unit 32 may perform preprocessing of digitizing, for example, image data, audio data, or the like so as to be handled by model learning in the subsequent stage, in addition to the time synchronization.

Returning to FIG. 3, the calculation unit 33 will be described. The calculation unit 33 calculates the improvement degree indicating the degree of improvement in the output precision of the second model to the output of the first model. For example, the calculation unit 33 can calculate a difference between the precision evaluation metric for the first model and the second model as the improvement degree.

Note that, as the precision evaluation metric, for example, a metric such as a determination coefficient ($R^2$), a root mean squared error (RMSE), or a mean absolute error (MAE) can be used.

Note that the calculation unit 33 may calculate the improvement degree every time a learning instruction is provided by the user together with the new data, or may learn in advance a model (improvement degree model) for estimating the improvement degree.

Specifically, the learning unit 32 first selects learning data (pseudo-new data) and additional data (pseudo-additional data) in a pseudo manner from the shared data DB 41, and learns a pseudo-first model based on the pseudo-new data and a pseudo-second model based on the pseudo-additional data.

Then, the calculation unit 33 learns an improvement degree model that outputs the improvement degree on the basis of a pseudo-improvement degree calculated on the basis of the pseudo-first model and the pseudo-second model. Specifically, the calculation unit 33 learns the improvement degree model using features of the pseudo-learning data and features of the pseudo-additional data as an explanatory variable and using the pseudo-improvement degree as an objective variable.

As a result, when new data is input by the user, the calculation processing of the improvement degree in a case where predetermined additional data is added can be accelerated by using the improvement degree model.

Note that the calculation unit 33 may include information (history information 43) regarding a behavior history of the user for the pseudo-learning data and the pseudo-additional data, output result information of the pseudo-first model and the pseudo-second model, and the like, as the explanatory variables of the improvement degree model. The prediction result information is information including a precision evaluation metric, statistics such as an average value and variance of data in each classification when the output of the model is classified into success and failure, and information such as a contribution (importance) to the model of each column data in the pseudo-learning data and the pseudo-additional data.

The presentation unit 34 generates predetermined presentation information based on the improvement degree calculated by the calculation unit 33 and presents the presentation information to the user. For example, in a case where new data is input by the user, the presentation unit 34 generates additional data in which the improvement degree estimated in the improvement degree model satisfies a predetermined condition as the presentation information, and presents the additional data to the user. For example, the presentation unit 34 generates additional data having an improvement degree equal to or greater than a predetermined threshold as presentation information and presents the additional data.

That is, in a case of learning the model on the basis of the new data, the presentation unit 34 presents additional data that can be expected to improve the output precision of the model by adding data.

In addition, in a case of generating a plurality of additional data as presentation information to present to the user, the presentation unit 34 generates recommendation level information based on the improvement degree and presents the recommendation level information. The recommendation level information is information indicating that the effect of improvement is high by adding data, and is calculated on the basis of, for example, the improvement degree and the meta-features. A description of the processing for calculating the recommendation level information is now given with reference to FIG. 8.

FIG. 8 is a diagram illustrating recommendation level information calculation processing. The upper part of FIG. 8 illustrates a case where learning data and additional data are plotted in a two-dimensional meta-features space. In such a meta-features space, the distance between data becomes shorter as the meta-features are more similar.

As illustrated in FIG. 8, first, the calculation unit 33 calculates a predetermined distance metric between the learning data and each additional data in the meta-features space. As the distance metric, for example, a Hamming distance, a Euclidean distance, a Mahalanobis distance, or the like can be used.

Subsequently, the calculation unit 33 sorts the additional data in ascending order by the distance metric, and selects a predetermined number of pieces of additional data having a small distance metric (close distance). Note that the calculation unit 33 may select additional data having distance metric equal to or greater than a predetermined value. The selected additional data is presented to the user as presentation information.

Further, the calculation unit 33 estimates the improvement degree for each column included in the selected additional data using the improvement degree model. In other words, the learning unit 32 performs model learning, calculation of an improvement degree, and the like by joining shared data having similar features to the learning data as additional data. Then, in a case where the learning data is "u", the additional data selected by the distance metric is "a", arbitrary column data in the selected additional data is "b", and the improvement degree of the column data is "g", the calculation unit 33 calculates a recommendation level metric $f_{abb}$ (b, u) of the column data for the learning data by the following Formula (1).

$$f_{add}(b, u) = \sum_{a \in S_A(u)} \frac{1}{w_a} g(a, b) \quad \cdots (1)$$

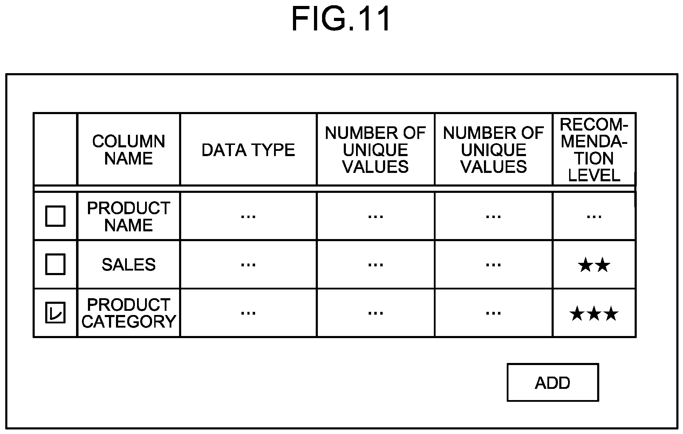

Then, the presentation unit 34 displays the recommendation level information for each piece of column data based on the calculated recommendation level metric together with the presentation information. Note that a specific presentation mode of the recommendation level information will be described later with reference to FIG. 11.

As described above, the presentation unit 34 presents the recommendation level information based on the improvement degree to the user, so that the user can grasp additional data (column data) having a high improvement effect, and thus, the model learning can be efficiently performed.

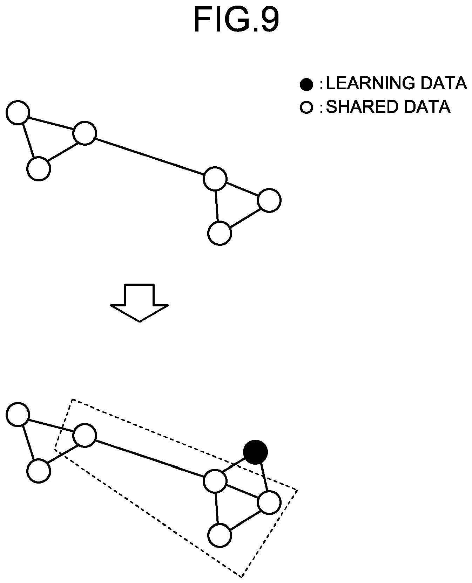

Note that the presentation unit 34 may present, for example, recommendation level information using graph theory other than the case of presenting the recommendation level information based on the recommendation level metric. This point will be described with reference to FIG. 9.

FIG. 9 is a diagram illustrating recommendation level information calculation processing using graph theory. As illustrated in FIG. 9, first, on the basis of the features of the additional data and the improvement degree between the additional data, the presentation unit 34 sets a node in a predetermined space as the additional data, and constructs a graph in which nodes having the improvement degree equal to or greater than a predetermined value are connected by a link.

Subsequently, the presentation unit 34 constructs nodes and links of the learning data on the constructed graph on the basis of the features of the learning data and the improvement degree with respect to each additional data. Then, the presentation unit 34 determines additional data having the number of links to the learning data equal to or less than a predetermined number as a target of the recommendation level information. For example, the presentation unit 34 presents the recommendation level information such that the higher the recommendation level can be obtained as the number of links is smaller. For example, as illustrated in FIG. 9, additional data having two or less links is set as a target of the recommendation level information.

<UI of User Equipment>

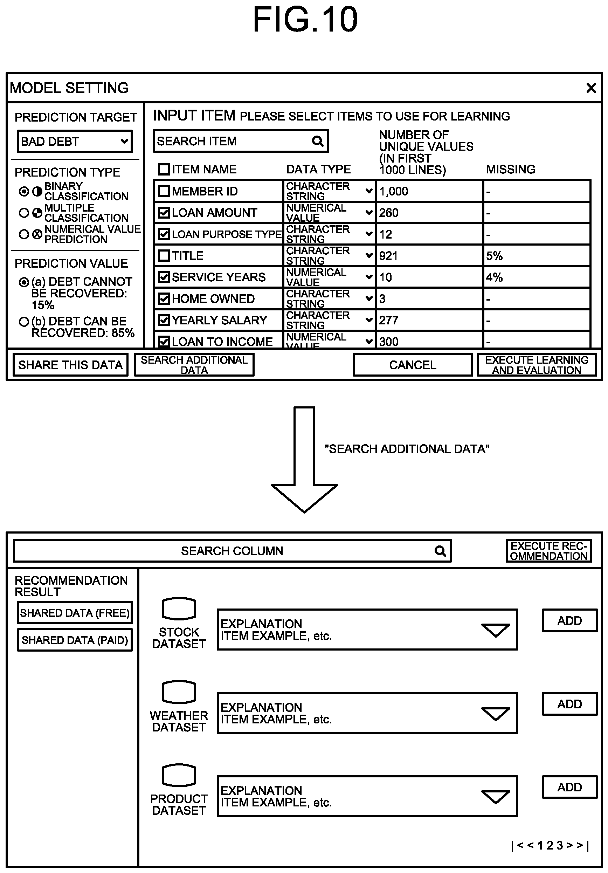

Next, an example of screen display of the user equipment 100 based on information from the information processing apparatus 1 will be described with reference to FIGS. 10 and 11. FIGS. 10 and 11 are diagrams illustrating an example of a screen display of the user equipment 100.

The upper part of FIG. 10 illustrates a screen on which the statistical data received from the information processing apparatus 1 is displayed. As illustrated in the upper part of FIG. 10, the user equipment 100 displays output information 101 related to the output of the model to be learned, statistical data 102, a search window 103 for searching a specific column in the statistical data, process execution buttons 104, 105, 106, and 107, and the like.

The output information 101 includes information (prediction target) of a column name to be an output of the model selected by the user, a data type (prediction type) to be output, a ratio (prediction value) of column data included in the new data, and the like.

Information of the statistical data described above is displayed in the statistical data 102. In addition, the search window 103 is arranged above the statistical data 102 so that a specific column in the statistical data can be searched.

The process execution buttons 104, 105, 106, and 107 are display buttons for executing various processes. The "share this data", which is the process execution button 104, is a button for executing a process for storing new data as shared data in the shared data DB 41. The "search additional data", which is the process execution button 105, is a button for searching for additional data that can be expected to improve the output precision of the model. "Cancel", which is the process execution button 106, is a button for canceling work. "Execute learning and evaluation", which is the process execution button 107, is a button for executing model learning processing (and evaluation processing). Note that the evaluation processing is processing of calculating the precision evaluation metric for the model.

Here, it is assumed that the user selects a predetermined column from the statistical data 102 (check box) and presses "search additional data" which is the process execution button 105. In such a case, the information processing apparatus 1 learns the first model and the second model using the selected column as new data and the output information 101 as an output of the model, and calculates the improvement degree. Then, the information processing apparatus 1 displays the additional data in which the recommendation level information based on the improvement degree satisfies a predetermined condition, as a recommendation result.

A lower part of FIG. 10 illustrates an example of a screen of a recommendation result, and illustrates "stock dataset", "weather dataset", and "product dataset" as additional data. Note that the dataset indicates that a plurality of pieces of column data is included.

Furthermore, as illustrated in the lower part of FIG. 10, appending information 110 such as description of an item example (column) or the like of the additional data is added to each additional data and displayed. That is, in a case of generating the additional data as the presentation information, the information processing apparatus 1 also generates predetermined appending information regarding the additional data. Note that, as the appending information, for example, information such as a column name of the additional data, a data size, statistical data for each column, an element value (representative value, histogram, and the like) of each column in the additional data, a preprocessing method used by another user in the past for the additional data, evaluation by another user who has actually used the additional data, the number of browses, the number of learning executions, the number of model operations, and the like is displayed.

Furthermore, in the lower part of FIG. 10, an add button 111 for adding additional data, an execution button 112 for executing model learning by adding recommended additional data, and a switching button 113 for switching between a screen displaying free shared data (additional data) sorted under a predetermined condition and a screen displaying paid shared data (additional data) are displayed.

Here, it is assumed that the user presses the add button 111 of the product dataset. FIG. 11 illustrates a screen displayed on the user equipment 100 when the add button 111 is pressed.

As illustrated in FIG. 11, when the add button 111 (FIG. 10) is pressed, details of each column data included in the additional data are displayed. On the screen illustrated in FIG. 11, detailed information 120 of the additional data, a check box 121, an add button 122, and the like are displayed.

In the detailed information 120, statistical data for each column included in the additional data and information on the "recommendation level" are displayed. The "recommendation level" is the above-described recommendation level information and is expressed by the number of stars. In FIG. 11, the higher the above-described recommendation level metric, the larger the number of stars.

In FIG. 11, the user selects the column name "product category" (in a checked state), and when the user presses the add button 122 in this state, the "product category" as the column data is added to the learning data as the additional data.

<Processing Procedure>

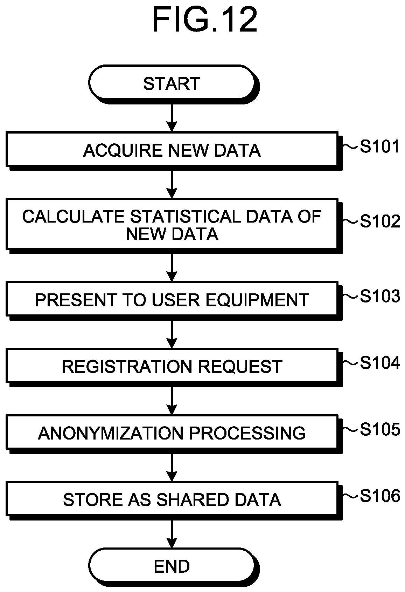

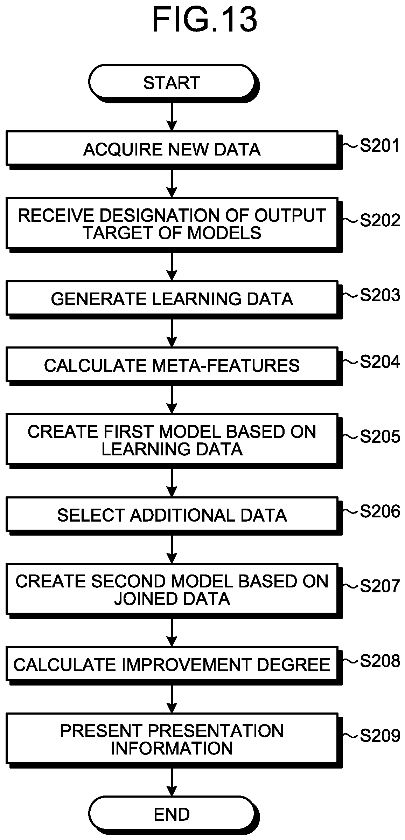

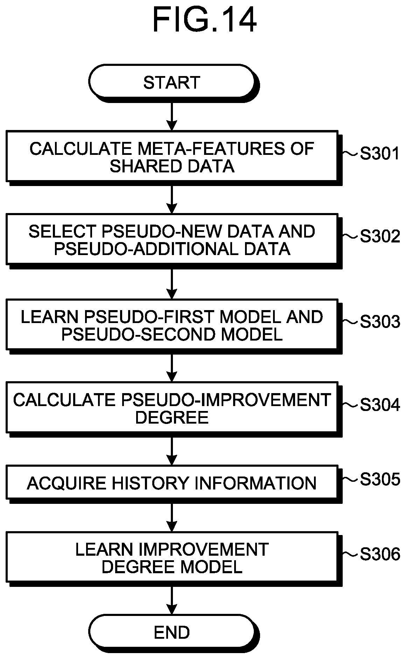

Next, a procedure of processing executed by the information processing apparatus 1 according to an embodiment will be described with reference to FIGS. 12 to 14. FIGS. 12 to 14 are flowcharts illustrating a procedure of processing executed by the information processing apparatus 1 according to an embodiment. FIG. 12 illustrates the shared data registration processing executed by the information processing apparatus 1, FIG. 13 illustrates presentation processing of the presentation information, and FIG. 14 illustrates learning processing of the improvement degree model.

First, registration processing of the shared data will be described with reference to FIG. 12.

As illustrated in FIG. 12, first, the control unit 3 of the information processing apparatus 1 acquires new data from the user equipment 100 (step S101).

Subsequently, the control unit 3 calculates statistical data of the acquired new data (step S102) and presents the statistical data to the user equipment 100 (step S103).

Subsequently, it is assumed that the control unit 3 has received a registration request for registering the new data as shared data from the user equipment 100 (step S104). Note that the control unit 3 corrects the statistical data as necessary when there is a statistical data correction request or the like.

Subsequently, the control unit 3 performs anonymization processing on data included in the new data and the statistical data as necessary according to a predetermined anonymization algorithm or designation from the user (step S105).

Subsequently, the control unit 3 stores association data obtained by associating the statistical data with the new data in the shared data DB 41 as shared data (step S106), and ends the registration processing.

Next, the presentation processing of the presentation information will be described with reference to FIG. 13.

As illustrated in FIG. 13, first, the control unit 3 acquires new data from the user equipment 100 (step S201).

Subsequently, the control unit 3 receives designation of an output target of the models (the first model and the second model) that learn on the basis of the new data (step S202).

Subsequently, the control unit 3 calculates the statistical data on the basis of the new data to generate learning data that is the association data obtained by associating the statistical data with the new data (step S203).

Subsequently, the control unit 3 calculates a meta-features that is features of the learning data (step S204).

Subsequently, the control unit 3 learns the first model by using the learning data as an explanatory variable and using the output target designated in step S202 as an objective variable (step S205).

Subsequently, the control unit 3 selects shared data having similar meta-features to the learning data as additional data (step S206).

Subsequently, the control unit 3 learns the second model by using joined data obtained by joining the learning data to additional data as an explanatory variable and using the output target designated in step S202 as an objective variable (step S207).

Subsequently, the control unit 3 calculates the improvement degree indicating the degree of improvement in the output precision of the second model to the output of the first model (step S208).

Subsequently, the control unit 3 presents predetermined presentation information based on the calculated improvement degree to the user (step S209), and ends the presentation processing.

Next, a description is now given of learning processing of the improvement degree model with reference to FIG. 14.

First, the control unit 3 calculates the meta-features of the shared data included in the shared data DB 41 stored in the storage unit 4 (step S301).

Subsequently, the control unit 3 selects shared data to be the pseudo new data (pseudo-new data) from the shared data DB 41, and selects shared data to be the pseudo additional data (pseudo-additional data) on the basis of the meta-features of the shared data that is the selected pseudo-new data (step S302).

Subsequently, the control unit 3 learns the pseudo first model (pseudo-first model) on the basis of the pseudo-new data and learns the pseudo second model (pseudo-second model) on the basis of the pseudo-new data and the pseudo-additional data (step S303).

Subsequently, the control unit 3 calculates the pseudo-improvement degree on the basis of the pseudo-first model and the pseudo-second model (step S304).

Subsequently, the control unit 3 acquires the history information 43 of the pseudo-new data and the pseudo-additional data (step S305).

Subsequently, the control unit 3 learns an improvement degree model by using the meta-features of the pseudo-new data and the meta-features of the pseudo-additional data, the information of the precision evaluation metric of the pseudo-first model and the pseudo-second model, and the history information 43 as explanatory variables and using the pseudo-improvement degree as an objective variable (step S306), and ends the processing.

<Hardware configuration example>

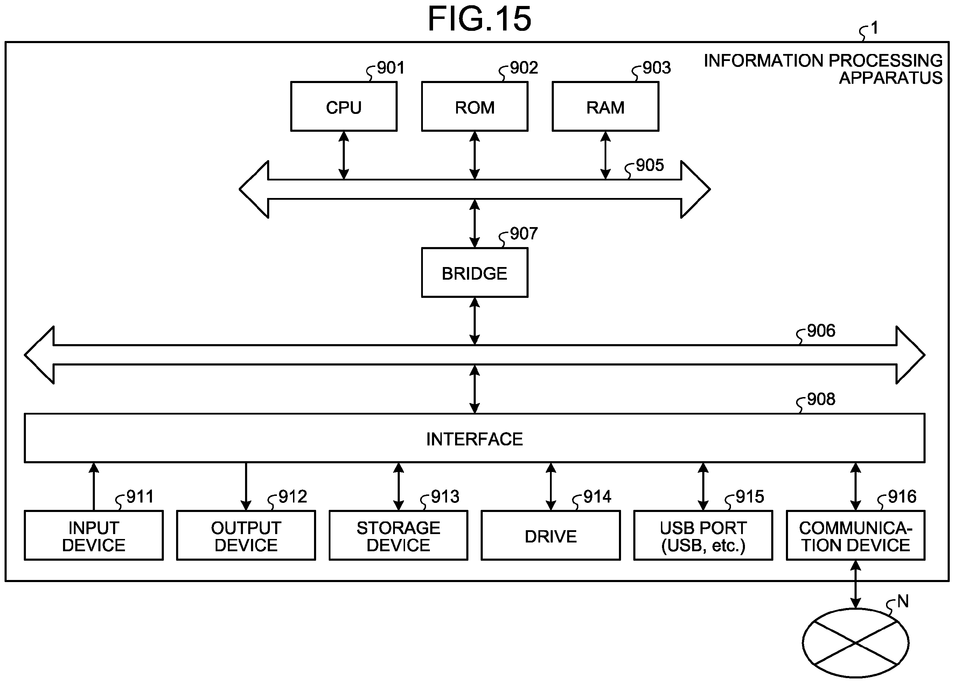

Subsequently, an example of a hardware configuration of the information processing apparatus 1 or the like according to the present embodiment will be described with reference to FIG. 15. FIG. 15 is a block diagram illustrating an example of a hardware configuration of the information processing apparatus 1 according to the present embodiment.

As illustrated in FIG. 15, the information processing apparatus 1 includes a central processing unit (CPU) 901, read only memory (ROM) 902, random access memory (RAM) 903, a host bus 905, a bridge 907, an external bus 906, an interface 908, an input device 911, an output device 912, a storage device 913, a drive 914, a connection port 915, and a communication device 916. The information processing apparatus 1 may include a processing circuit such as an electric circuit, a DSP, or an ASIC instead of or in addition to the CPU 901.

The CPU 901 functions as an arithmetic processing device and a control device, and controls an overall operation in the information processing apparatus 1 according to various programs. Furthermore, the CPU 901 may be a microprocessor. The ROM 902 stores programs, operation parameters, and the like used by the CPU 901. The RAM 903 temporarily stores programs used in execution of the CPU 901, parameters that appropriately change in the execution, and the like. The CPU 901 may execute, for example, a function as the acquisition unit 31, the learning unit 32, the calculation unit 33, and the presentation unit 34.

The CPU 901, the ROM 902, and the RAM 903 are mutually connected by the host bus 905 including a CPU bus and the like. The host bus 905 is connected to the external bus 906 such as a peripheral component interconnect/interface (PCI) bus via the bridge 907. Note that the host bus 905, the bridge 907, and the external bus 906 do not necessarily need to be separately configured, and these functions may be implemented on one bus.

The input device 911 is a device to which information is input by the user, such as a mouse, a keyboard, a touch panel, a button, a microphone, a switch, and a lever. Alternatively, the input device 911 may be, for example, a remote control device using infrared rays or other radio waves, or may be an external connection device such as a mobile phone or a PDA corresponding to the operation of the information processing apparatus 1. Moreover, the input device 911 may include, for example, an input control circuit or the like that generates an input signal on the basis of the information input by the user using the above-described input means.

The output device 912 is a device capable of visually or aurally notifying the user of information. The output device 912 includes display devices such as a cathode ray tube (CRT) display device, a liquid crystal display device, a plasma display device, an electro luminescence (EL) display device, a laser projector, a light emitting diode (LED) projector, and a lamp, audio output devices such as a speaker and a headphone, a printer device, and the like.

The output device 912 outputs, for example, results obtained by various types of processing performed by the information processing apparatus 1. Specifically, the output device 912 visually displays the results obtained by the various types of processing performed by the information processing apparatus 1 in various formats such as texts, images, tables, and graphs. Alternatively, the output device 912 may convert an audio signal including reproduced audio data, acoustic data, and the like into an analog signal and aurally output the analog signal.

The storage device 913 is a device for data storage formed as an example of the storage unit of the information processing apparatus 1. The storage device 913 may be realized by, for example, a magnetic storage device such as a hard disk drive (HDD), a semiconductor storage device, an optical storage device, a magneto-optical storage device, or the like. The storage device 913 may include. for example, a storage medium, a recording device that records data in the storage medium, a reading device that reads data from the storage medium, a deletion device that deletes data recorded in the storage medium, and the like. The storage device 913 stores programs executed by the CPU 901, various data, various data acquired from the outside, and the like.

The drive 914 is a reader/writer for a storage medium, and is built in or externally attached to the information processing apparatus 1. The drive 914 reads out information recorded in a removable storage medium such as mounted magnetic disk, optical disk, magneto-optical disk, or semiconductor memory, and outputs the information to the RAM 903. Furthermore, the drive 914 can also write information to the removable storage medium.

The connection port 915 is an interface connected to an external device. The connection port 915 is a connection port to an external device capable of transmitting data by a universal serial bus (USB) and the like, for example.

The communication device 916 is, for example, an interface including a communication device and the like for being connected to a network N. The communication device 916 may be, for example, a communication card for wired or wireless local area network (LAN), long term evolution (LTE), Bluetooth (registered trademark), wireless USB (WUSB), or the like. Furthermore, the communication device 916 may also be a router for optical communication, a router for asymmetric digital subscriber line (ADSL), a modem for various communications, or the like. The communication device 916 can transmit and receive signals and the like according to a predetermined protocol such as TCP/IP and the like, for example, with the Internet or other communication devices.

Note that the network 40 is a wired or wireless transmission path of information. For example, the network 40 may include the Internet, a public network such as a telephone network, a satellite communication network, or the like, various local area networks (LANs) including Ethernet (registered trademark), a wide area network (WAN), or the like. Furthermore, the network 40 may include a leased line network such as an internet protocol-virtual private network (IP-VPN).

Note that it is also possible to create a computer program for causing hardware such as a CPU, ROM, and RAM built in the information processing apparatus 1 to exhibit functions equivalent to the respective configurations of the information processing apparatus 1 according to the present embodiment described above. Furthermore, a storage medium storing the computer program can also be provided.

Although the preferred embodiments of the present disclosure have been described above with reference to the accompanying drawings, the technical scope of the present disclosure is not limited to the above examples. It is obvious that a person skilled in the art may find various alterations and modifications within the scope of the appended claims, and it should be understood that they will naturally come under the technical scope of the present disclosure.

Furthermore, the effects described in this specification are merely illustrative or exemplified effects, and are not limitative. That is, with or in the place of the above effects, the technology according to the present disclosure may achieve other effects that are clear to those skilled in the art from the description of this specification.

<Modification>

Further, the above-mentioned information processing program may be stored in a disk device provided in a server device on a network such as the Internet in such a way to be downloaded to a computer. Further, the above-mentioned functions may be implemented by cooperation between an operating system (OS) and application software. In this case, other parts than OS may be stored in a medium for delivery, or other parts than OS may be stored in the server device and downloaded to a computer.

Among the processing described in the embodiments, all or a part of the processing, described as automatic processing, can be performed manually, or all or a part of the processing, described as manual processing, can be performed automatically by a known method. In addition, the processing procedures, specific names, and information including various data and parameters indicated in the document and the drawings can be arbitrarily changed unless otherwise specified. For example, various types of information illustrated in the drawings are not limited to the illustrated information.

Furthermore, the constituent elements of the individual devices illustrated in the drawings are functionally conceptual and are not necessarily configured physically as illustrated in the drawings. To be specific, the specific form of distribution and integration of the devices is not limited to the one illustrated in the drawings, and all or a part thereof can be configured by functionally or physically distributing and integrating in arbitrary units according to various loads, usage conditions, and the like.

Furthermore, the embodiments described above can be appropriately combined to the extent that the processing contents do not contradict each other. Furthermore, the order of each step illustrated in the flowcharts and the sequence diagrams of the above-described embodiment can be changed as appropriate.

<Summary>

As described above, according to an embodiment of the present disclosure, the information processing apparatus 1 according to the present embodiment includes the learning unit 32, the calculation unit 33, and the presentation unit 34. The learning unit 32 learns the first model based on predetermined new data acquired from a terminal device (user equipment 100) possessed by the user and the second model based on joined data obtained by joining shared data stored in advance in the storage unit 4 as additional data with the new data. The calculation unit 33 calculates the improvement degree indicating the degree of improvement in the output precision of the second model to the output of the first model. The presentation unit 34 generates predetermined presentation information based on the improvement degree calculated by the calculation unit 33.

As a result, it is possible to present data (shared data) useful for model learning to the user.

The learning unit 32 joins shared data having similar features to the new data as additional data.

As a result, it is possible to avoid performing model learning by adding additional data that is irrelevant to the new data of the user, that is, not normally collected (not possible) by the user. In other words, the user can present a useful data (easy to collect) as additional data.

The learning unit 32 selects pseudo-new data and pseudo-additional data from the shared data stored in the storage unit 4, and learns the pseudo-first model based on the pseudo-new data and the pseudo-second model based on the pseudo-additional data. The calculation unit 33 learns an improvement degree model that outputs the improvement degree on the basis of a pseudo-improvement degree calculated on the basis of the pseudo-first model and the pseudo-second model.

As a result, the model that outputs the improvement degree can be learned in advance, and therefore it is not necessary to calculate the improvement degree by learning the first model and the second model each time new data is input, and the processing load of model learning can be reduced.

The calculation unit 33 learns the improvement degree model using features of the pseudo-new data and features of the pseudo-additional data as an explanatory variable and using the pseudo-improvement degree as an objective variable.

As a result, the improvement degree model based on the features can be learned, and therefore a highly precise model can be generated.

The calculation unit 33 further includes information regarding a behavior history of the user for the pseudo-new data and the pseudo-additional data as the explanatory variable.

As a result, the precision of the improvement degree model to be generated can be further improved.

The presentation unit 34 generates additional data having an improvement degree satisfying a predetermined condition as presentation information.

As a result, for example, it is possible to present additional data that is highly likely to improve the model as the presentation information.

The presentation unit 34, in a case of generating a plurality of the additional data as the presentation information, also generates recommendation level information based on the improvement degree.

As a result, it is possible to grasp how much improvement effect can be expected for each additional data before adding the data, and therefore it is possible to efficiently perform the model learning in which the user selects more effective additional data.

The presentation unit 34, in a case of generating the additional data as the presentation information, also generates predetermined appending information regarding the additional data.

As a result, the user can see the appending information as a determination material when adding the additional data, and therefore selection of the additional data desired by the user can be facilitated.

The new data and the additional data are time-series data. In a case where the time series of the new data and the additional data do not match, the learning unit 32 generates and combines additional data for matching with the time series of the new data.

As a result, the time series of the data of the first model and the data of the second model can be aligned, and therefore the precision of the improvement degree calculated from the first model and the second model can be enhanced.

The information processing apparatus 1 further includes the acquisition unit 31 configured to acquire the new data as the shared data from the user equipment 100.

As a result, the shared data DB 41 is updated (added and updated) as needed, the precision of the model learning processing and the improvement degree calculation processing using the shared data can be improved.

The acquisition unit 31 performs and stores anonymization processing on the shared data satisfying a predetermined condition in the storage unit 4.

As a result, for example, it is possible to avoid disclosure of customer information, personal information, and the like to other users.

The learning unit 32 joins the additional data subjected to predetermined preprocessing with the new data.

As a result, optimal preprocessing can be applied to the additional data when model learning is performed, so that the precision of model learning can be improved.

Although the embodiments of the present disclosure have been described above, the technical scope of the present disclosure is not limited to the embodiments described above as it is, and various modifications can be made without departing from the gist of the present disclosure. In addition, constituent elements of different embodiments and modifications may be appropriately combined.

Furthermore, the effects of the embodiments described in the present specification are merely examples and are not limited, and other effects may be provided.

Note that the present technology can also have the following configurations.

(1) An information processing apparatus comprising:

a learning unit configured to learn a first model on a basis of predetermined new data acquired from a terminal device held by a user and learn a second model on a basis of joined data obtained by joining shared data as additional data with the new data, the shared data being stored in advance in a storage unit;
a calculation unit configured to calculate an improvement degree indicating a degree of improvement in output precision of the second model to output of the first model; and
a presentation unit configured to generate presentation information based on the improvement degree calculated by the calculation unit.

(2) The information processing apparatus according to the above-described (1), wherein

the learning unit
joins the shared data having similar features to the new data as the additional data.

(3) The information processing apparatus according to the above-described (1) to (2), wherein

the learning unit
selects pseudo-new data and pseudo-additional data among the shared data stored in the storage unit and learns a pseudo-first model based on the pseudo-new data and a pseudo-second model based on the pseudo-additional data, and
the calculation unit
learns an improvement degree model that outputs the improvement degree on a basis of a pseudo-improvement degree calculated on a basis of the pseudo-first model and the pseudo-second model.

(4) The information processing apparatus according to the above-described (1) to (3), wherein

the calculation unit
learns the improvement degree model using features of the pseudo-new data and features of the pseudo-additional data as an explanatory variable and using the pseudo-improvement degree as an objective variable.

(5) The information processing apparatus according to the above-described (1) to (4), wherein

the calculation unit
further includes information regarding a behavior history of the user for the pseudo-new data and the pseudo-additional data as the explanatory variable.

(6) The information processing apparatus according to the above-described (1) to (5), wherein

the presentation unit
generates the additional data having the improvement degree satisfying a predetermined condition as the presentation information.

(7) The information processing apparatus according to the above-described (1) to (6), wherein

the presentation unit,
in a case of generating a plurality of the additional data as the presentation information, also generates recommendation level information based on the improvement degree.

(8) The information processing apparatus according to the above-described (1) to (7), wherein

the presentation unit,
in a case of generating the additional data as the presentation information, also generates predetermined appending information regarding the additional data.

(9) The information processing apparatus according to the above-described (1) to (8), wherein

the new data and the additional data are time-series data, and
the learning unit,
in a case where the new data and the additional data are inconsistent in time-series, generates and joins the additional data to be consistent with the time-series of the new data.

(10) The information processing apparatus according to the above-described (1) to (9), further comprising:
an acquisition unit configured to acquire the new data as the shared data from the terminal device.
(11) The information processing apparatus according to the above-described (1) to (10), wherein

the acquisition unit
performs and stores anonymization processing on the shared data satisfying a predetermined condition in the storage unit.

(12) The information processing apparatus according to the above-described (1) to (11), wherein

the learning unit
joins the additional data subjected to predetermined preprocessing with the new data.

(13) An information processing method comprising:

a learning step of learning a first model on a basis of predetermined new data acquired from a terminal device held by a user and learning a second model on a basis of joined data obtained by joining shared data as additional data with the new data, the shared data being stored in advance in a storage unit;
a calculation step of calculating an improvement degree indicating a degree of improvement in output precision of the second model to output of the first model; and
a presentation step of generating presentation information based on the improvement degree calculated by the calculation step.

(14) An information processing program causing a computer to execute:

a learning procedure of learning a first model on a basis of predetermined new data acquired from a terminal device held by a user and learning a second model on a basis of joined data obtained by joining shared data as additional data with the new data, the shared data being stored in advance in a storage unit;
a calculation procedure of calculating an improvement degree indicating a degree of improvement in output precision of the second model to output of the first model; and
a presentation procedure of generating presentation information based on the improvement degree calculated by the calculation procedure.

Reference Signs List

1        INFORMATION PROCESSING APPARATUS
2        COMMUNICATION UNIT

3     CONTROL UNIT
4     STORAGE UNIT
31    ACQUISITION UNIT
32    LEARNING UNIT
33    CALCULATION UNIT
34    PRESENTATION UNIT
100   USER EQUIPMENT

**Claims**

1. An information processing apparatus comprising:

   a learning unit configured to learn a first model on a basis of predetermined new data acquired from a terminal device held by a user and learn a second model on a basis of joined data obtained by joining shared data as additional data with the new data, the shared data being stored in advance in a storage unit;
   a calculation unit configured to calculate an improvement degree indicating a degree of improvement in output precision of the second model to output of the first model; and
   a presentation unit configured to generate presentation information based on the improvement degree calculated by the calculation unit.

2. The information processing apparatus according to claim 1, wherein

   the learning unit
   joins the shared data having similar features to the new data as the additional data.

3. The information processing apparatus according to claim 1, wherein

   the learning unit
   selects pseudo-new data and pseudo-additional data among the shared data stored in the storage unit and learns a pseudo-first model based on the pseudo-new data and a pseudo-second model based on the pseudo-additional data, and
   the calculation unit
   learns an improvement degree model that outputs the improvement degree on a basis of a pseudo-improvement degree calculated on a basis of the pseudo-first model and the pseudo-second model.

4. The information processing apparatus according to claim 3, wherein

   the calculation unit
   learns the improvement degree model using features of the pseudo-new data and features of the pseudo-additional data as an explanatory variable and using the pseudo-improvement degree as an objective variable.

5. The information processing apparatus according to claim 4, wherein

   the calculation unit
   further includes information regarding a behavior history of the user for the pseudo-new data and the pseudo-additional data as the explanatory variable.

6. The information processing apparatus according to claim 1, wherein

   the presentation unit
   generates the additional data having the improvement degree satisfying a predetermined condition as the presentation information.

7. The information processing apparatus according to claim 6, wherein

   the presentation unit,
   in a case of generating a plurality of the additional data as the presentation information, also generates recommendation level information based on the improvement degree.

8. The information processing apparatus according to claim 6, wherein

the presentation unit,
in a case of generating the additional data as the presentation information, also generates predetermined appending information regarding the additional data.

9. The information processing apparatus according to claim 1, wherein

the new data and the additional data are time-series data, and
the learning unit,
in a case where the new data and the additional data are inconsistent in time-series, generates and joins the additional data to be consistent with the time-series of the new data.

10. The information processing apparatus according to claim 1, further comprising:
an acquisition unit configured to acquire the new data as the shared data from the terminal device.

11. The information processing apparatus according to claim 10, wherein

the acquisition unit
performs and stores anonymization processing on the shared data satisfying a predetermined condition in the storage unit.

12. The information processing apparatus according to claim 1, wherein

the learning unit
joins the additional data subjected to predetermined preprocessing with the new data.

13. An information processing method comprising:

a learning step of learning a first model on a basis of predetermined new data acquired from a terminal device held by a user and learning a second model on a basis of joined data obtained by joining shared data as additional data with the new data, the shared data being stored in advance in a storage unit;
a calculation step of calculating an improvement degree indicating a degree of improvement in output precision of the second model to output of the first model; and
a presentation step of generating presentation information based on the improvement degree calculated by the calculation step.

14. An information processing program causing a computer to execute:

a learning procedure of learning a first model on a basis of predetermined new data acquired from a terminal device held by a user and learning a second model on a basis of joined data obtained by joining shared data as additional data with the new data, the shared data being stored in advance in a storage unit;
a calculation procedure of calculating an improvement degree indicating a degree of improvement in output precision of the second model to output of the first model; and
a presentation procedure of generating presentation information based on the improvement degree calculated by the calculation procedure.

# FIG.1A

# FIG.1B

# FIG.2

S

| INFORMATION PROCESSING APPARATUS | 1 |

N

| USER EQUIPMENT | 100 |  | USER EQUIPMENT | 100 |  . . . .

# FIG.3

# FIG.4

NEW DATA

| PRODUCT ID | PRODUCT NAME | PRICE | MANUFACTURER | ⋯ |
|---|---|---|---|---|
| SC-001 | DXC-110X | 13440 YEN | AA COMPANY | ⋯ |
| SC-002 | DXC-110C | 9600 YEN | BB COMPANY | ⋯ |
| SC-003 | SCC-003A | 19200 YEN | CC COMPANY | ⋯ |
| ⋮ | ⋮ | ⋮ | ⋮ | ⋮ |

⇩

STATISTICAL DATA

| COLUMN NAME | DATA TYPE | NUMBER OF UNIQUE VALUES | MISSING RATE |
|---|---|---|---|
| PRODUCT ID | ⋯ | ⋯ | ⋯ |
| PRODUCT NAME | ⋯ | ⋯ | ⋯ |
| PRICE | ⋯ | ⋯ | ⋯ |
| MANUFACTURER | ⋯ | ⋯ | ⋯ |
| ⋮ | ⋮ | ⋮ | ⋮ |

# FIG.5

| COLUMN NAME | DATA TYPE | NUMBER OF UNIQUE VALUES | MISSING RATE | MAXIMUM VALUE | CONCAT-ENATION | META-FEATURES (FOR EACH COLUMN) | META-FEATURES (FOR EACH TABLE) |
|---|---|---|---|---|---|---|---|
| UNIQUE ID | CATEGORICAL VALUE | 1000 | 0% | 1000 | 0 | [0,1,0,5,…] | |
| ORDER ID | NUMERICAL VALUE | 500 | 3% | 510 | 0 | [0,0,3,10,…] | [0,0,3,50,…] |
| PRODUCT ID | CHARACTER STRING | 300 | 0% | 300 | 1 | [0,1,0,7,…] | |

| COLUMN NAME | DATA TYPE | NUMBER OF UNIQUE VALUES | MISSING RATE | MAXIMUM VALUE | CONCAT-ENATION | META-FEATURES (FOR EACH COLUMN) | META-FEATURES (FOR EACH TABLE) |
|---|---|---|---|---|---|---|---|
| PRODUCT ID | CHARACTER STRING | 300 | … | … | 1 | [0,1,0,5,…] | |
| PRODUCT NAME | CHARACTER STRING | 50 | … | … | 0 | [0,0,3,10,…] | [1,0,3,40,…] |
| PRICE | NUMERICAL VALUE | 200 | 10% | … | 0 | [0,1,0,7,…] | |
| MANUFAC-TURER | CATEGORICAL VALUE | 8 | 5% | … | 0 | [0,1,0,7,…] | |

META-FEATURES (FOR EACH CONCATENATION TABLE): [1,0,0,90,…]

EP 4 105 789 A1

# FIG.6

ADDITIONAL DATA 1

| COLUMN NAME | DATA TYPE | NUMBER OF UNIQUE VALUES | NUMBER OF UNIQUE VALUES |
|---|---|---|---|
| COMPANY NAME | ... | ... | ... |
| CAPITAL | ... | ... | ... |

LEARNING DATA

| COLUMN NAME | DATA TYPE | NUMBER OF UNIQUE VALUES | MISSING RATE |
|---|---|---|---|
| BANKRUPT | ... | ... | ... |
| COMPANY NAME | ... | ... | ... |
| MAIN PRODUCTS | ... | ... | ... |

ADDITIONAL DATA 2

| COLUMN NAME | DATA TYPE | NUMBER OF UNIQUE VALUES | NUMBER OF UNIQUE VALUES |
|---|---|---|---|
| PRODUCT NAME | ... | ... | ... |
| SALES | ... | ... | ... |
| PRODUCT CATEGORY | ... | ... | ... |

JOINED DATA

| COLUMN NAME | DATA TYPE | NUMBER OF UNIQUE VALUES | MISSING RATE |
|---|---|---|---|
| BANKRUPT | ... | ... | ... |
| COMPANY NAME | ... | ... | ... |
| MAIN PRODUCTS | ... | ... | ... |
| CAPITAL | ... | ... | ... |
| PRODUCT CATEGORY | ... | ... | ... |

# FIG.7

LEARNING DATA

| COLUMN NAME | DATA TYPE | NUMBER OF UNIQUE VALUES | MISSING RATE |
|---|---|---|---|
| TIME | ... | ... | ... |
| STOCK PRICE OF A COMPANY | ... | ... | ... |
| PR | ... | ... | ... |
| SALES | ... | ... | ... |

ADDITIONAL DATA

| COLUMN NAME | DATA TYPE | NUMBER OF UNIQUE VALUES | NUMBER OF UNIQUE VALUES | EFFEC-TIVENESS |
|---|---|---|---|---|
| TIME | ... | ... | ... | ... |
| B COM-PANY | ... | ... | ... | ... |
| C COM-PANY | ... | ... | ... | ... |
| D COM-PANY | ... | ... | ... | ... |

JOIN AFTER TIME SYNCHRONIZATION

JOINED DATA

| COLUMN NAME | DATA TYPE | NUMBER OF UNIQUE VALUES | MISSING RATE |
|---|---|---|---|
| TIME | ... | ... | ... |
| STOCK PRICE OF A COMPANY | ... | ... | ... |
| PR | ... | ... | ... |
| SALES | ... | ... | ... |
| STOCK PRICE OF B COMPANY | ... | ... | ... |
| STOCK PRICE OF D COMPANY | ... | ... | ... |

EP 4 105 789 A1

# FIG.8

● : LEARNING DATA
○ : SHARED DATA

| ADDITIONAL DATA ID | DISTANCE METRIC |
|---|---|
| A | 3 |
| B | 10 |
| C | 32 |
| D | ⋯ |
| ⋮ | ⋮ |

| COLUMN NAME | IMPROVEMENT DEGREE |
|---|---|
| A1 | 4.00 |
| A2 | 16.0 |
| A3 | 2.10 |
| A4 | ⋯ |
| ⋮ | ⋮ |

# FIG.9

● : LEARNING DATA
○ : SHARED DATA

# FIG.10

| MODEL SETTING | | | | ✕ |
|---|---|---|---|---|

**PREDICTION TARGET**

[ BAD DEBT ▾ ]

**PREDICTION TYPE**

◉ ◑ BINARY CLASSIFICATION

○ ◔ MULTIPLE CLASSIFICATION

○ ⊗ NUMERICAL VALUE PREDICTION

**PREDICTION VALUE**

◉ (a) DEBT CANNOT BE RECOVERED: 15%

○ (b) DEBT CAN BE RECOVERED: 85%

**INPUT ITEM** PLEASE SELECT ITEMS TO USE FOR LEARNING

[ SEARCH ITEM 🔍 ]

| ☐ ITEM NAME | DATA TYPE | NUMBER OF UNIQUE VALUES (IN FIRST 1000 LINES) | MISSING |
|---|---|---|---|
| ☐ MEMBER ID | CHARACTER STRING ▾ | 1,000 | - |
| ☑ LOAN AMOUNT | NUMERICAL VALUE ▾ | 260 | - |
| ☑ LOAN PURPOSE TYPE | CHARACTER STRING ▾ | 12 | - |
| ☐ TITLE | CHARACTER STRING ▾ | 921 | 5% |
| ☑ SERVICE YEARS | NUMERICAL VALUE ▾ | 10 | 4% |
| ☑ HOME OWNED | CHARACTER STRING ▾ | 3 | - |
| ☑ YEARLY SALARY | CHARACTER STRING ▾ | 277 | - |
| ☑ LOAN TO INCOME | NUMERICAL VALUE ▾ | 300 | - |

| SHARE THIS DATA | SEARCH ADDITIONAL DATA | | CANCEL | EXECUTE LEARNING AND EVALUATION |
|---|---|---|---|---|

⬇

"SEARCH ADDITIONAL DATA"

| SEARCH COLUMN 🔍 | EXECUTE REC-OMMENDATION |
|---|---|

**RECOMMENDATION RESULT**

[ SHARED DATA (FREE) ]

[ SHARED DATA (PAID) ]

STOCK DATASET — EXPLANATION ITEM EXAMPLE, etc. ▽ [ ADD ]

WEATHER DATASET — EXPLANATION ITEM EXAMPLE, etc. ▽ [ ADD ]

PRODUCT DATASET — EXPLANATION ITEM EXAMPLE, etc. ▽ [ ADD ]

| < < 1 2 3 > > |

# FIG.11

| | COLUMN NAME | DATA TYPE | NUMBER OF UNIQUE VALUES | NUMBER OF UNIQUE VALUES | RECOM-MENDA-TION LEVEL |
|---|---|---|---|---|---|
| ☐ | PRODUCT NAME | ... | ... | ... | ... |
| ☐ | SALES | ... | ... | ... | ★★ |
| ☑ | PRODUCT CATEGORY | ... | ... | ... | ★★★ |

ADD

# FIG.12

START

ACQUIRE NEW DATA ~S101

CALCULATE STATISTICAL DATA OF NEW DATA ~S102

PRESENT TO USER EQUIPMENT ~S103

REGISTRATION REQUEST ~S104

ANONYMIZATION PROCESSING ~S105

STORE AS SHARED DATA ~S106

END

# FIG.13

START

ACQUIRE NEW DATA ~S201

RECEIVE DESIGNATION OF OUTPUT TARGET OF MODELS ~S202

GENERATE LEARNING DATA ~S203

CALCULATE META-FEATURES ~S204

CREATE FIRST MODEL BASED ON LEARNING DATA ~S205

SELECT ADDITIONAL DATA ~S206

CREATE SECOND MODEL BASED ON JOINED DATA ~S207

CALCULATE IMPROVEMENT DEGREE ~S208

PRESENT PRESENTATION INFORMATION ~S209

END

# FIG.14

START

CALCULATE META-FEATURES OF SHARED DATA — S301

SELECT PSEUDO-NEW DATA AND PSEUDO-ADDITIONAL DATA — S302

LEARN PSEUDO-FIRST MODEL AND PSEUDO-SECOND MODEL — S303

CALCULATE PSEUDO-IMPROVEMENT DEGREE — S304

ACQUIRE HISTORY INFORMATION — S305

LEARN IMPROVEMENT DEGREE MODEL — S306

END

# FIG.15

INFORMATION PROCESSING APPARATUS ⌐1

- CPU ⌐901
- ROM ⌐902
- RAM ⌐903
- ⌐905
- BRIDGE ⌐907
- ⌐906
- INTERFACE ⌐908
- INPUT DEVICE ⌐911
- OUTPUT DEVICE ⌐912
- STORAGE DEVICE ⌐913
- DRIVE ⌐914
- USB PORT (USB, etc.) ⌐915
- COMMUNICA-TION DEVICE ⌐916
- N

EP 4 105 789 A1

## INTERNATIONAL SEARCH REPORT

| International application No. |
|---|
| PCT/JP2021/002366 |

**A. CLASSIFICATION OF SUBJECT MATTER**
G06F 16/2458(2019.01)i; G06F 16/28(2019.01)i; G06N 20/00(2019.01)i
FI: G06F16/2458; G06F16/28; G06N20/00 130

According to International Patent Classification (IPC) or to both national classification and IPC

**B. FIELDS SEARCHED**

Minimum documentation searched (classification system followed by classification symbols)
G06F16/00-16/958; G06N3/00-99/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | ZHANG, Yi et al., "Juneau: Data Lake Management for Jupyter", Proceedings of the VLDB Endowment [online], 01 August 2019, vol. 12, no. 12, pp. 1902-1905, [retrieval date: 09 April 2021], Internet<URL: https://par.nsf.gov/biblio/10195975-juneau-data-lake-management-jupyter>, in particular, "ABSTRACT", "1. INTRODUCTION", "2.2 Juneau Architecture and Components" | 1-2, 6-14<br>3-5 |
| Y<br>A | JP 2017-167980 A (TOSHIBA CORP.) 21 September 2017 (2017-09-21) abstract, paragraph [0064] | 1-2, 6-14<br>3-5 |

☒ Further documents are listed in the continuation of Box C.　　☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 April 2021 (09.04.2021) | 20 April 2021 (20.04.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

Form PCT/ISA/210 (continuation of second sheet) (January 2015)

**INTERNATIONAL SEARCH REPORT**

| International application No. |
| --- |
| PCT/JP2021/002366 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | 名生貴昭ほか，Dwarfstar: ライフログデータ処理のためのフレームワーク，電子情報通信学会論文誌, 01 May 2013, vol. J96-D, no. 5, pp. 1267-1278, in particular, "Summary", page 1268, right column, lines 7-10, (MYOJO, Takaaki et al., "Dwarfstar: Towards an Optimised Framework for Lifelog Analysis", Proceedings of IEICE) | 9<br>1-8, 10-14 |
| A | KUMAR, Arun, "To Join or Not to Join? Thinking Twice about Joins before Feature Selection", SIGMOD'16: Proceedings of the 2016 International Conference on Management of Data, June 2016, pp. 19-34, entire text, all drawings | 1-14 |

33

INTERNATIONAL SEARCH REPORT
Information on patent family members

International application No.

PCT/JP2021/002366

| Patent Documents referred in the Report | Publication Date | Patent Family | Publication Date |
|---|---|---|---|
| JP 2017-167980 A | 21 Sep. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019507444 A